# EUROPEAN PATENT SPECIFICATION

(11) **EP 0 405 031 B1**
(45) Date of publication and mention of the grant of the patent: **01.03.1995**
(21) Application number: 89306701.7
(22) Date of filing: 30.06.1989
(51) Int. Cl.: G06K 15/00

(54) **Printer control system for controlling printers differing from each other in dot density**
Druckersteuerungssystem zum Steuern von Druckern mit voneinander abweichender Punktdichte
Système de commande d'imprimante pour commander des imprimantes ayant des densités de points différentes

(43) Date of publication of application: 02.01.1991
(73) Proprietor: Oki Electric Industry Company, Limited, Tokyo 105 (JP)
(72) Inventor: Sudoh, Eisho OKI Electric Industry Co., Ltd., Minato-ku Tokyo (JP)
(74) Representative: Read, Matthew Charles

(56) References cited:
- GB-A- 2 201 273
- PATENT ABSTRACTS OF JAPAN, vol. 7, no. 142 (P-205)[1287], 22nd June 1983;& JP-A-58 056 085 (YASUSHI UEDA)

## Description

The present invention relates to a method of processing graphics print data and a printer control system.

In most cases, a printing system including a plurality of printers differing from each other in dot density and capable of simultaneously operating one or more than one of the plurality of printers includes an impact wire dot serial printer and a nonimpact page printer.

Generally, the highest dot density of the serial printer is 180 dots per inch and the serial printer generates characters by a dot matrix of 24 x 24, while the highest dot density of the page printer is 240 dots per inch and the page printer generates characters by a dot matrix of 32 x 32. the dot density of either the serial printer or the page printer must be converted to print characters in a format specified by the host system. Ordinarily, the dot density of the page printer, which, in most cases, is connected additionally to the printing system, is converted. In this case, characters are expressed by dot images formed by a dot matrix, namely, a font pattern.

GB-A-2201273 discloses a method of processing graphics print data wherein blocks of dot data in a format for printing by a printer operative at a first dot density are subjected to a conversion for printing by a printer operative at a second different dot density, and also a printer control system comprising buffer means for storing received blocks of graphics print data in a format for printing by a printer operative at a first dot density, dot density conversion means for converting the graphics print data for printing by a printer operative at a second different dot density and interface means for transferring converted graphics print data to a print unit for printing.

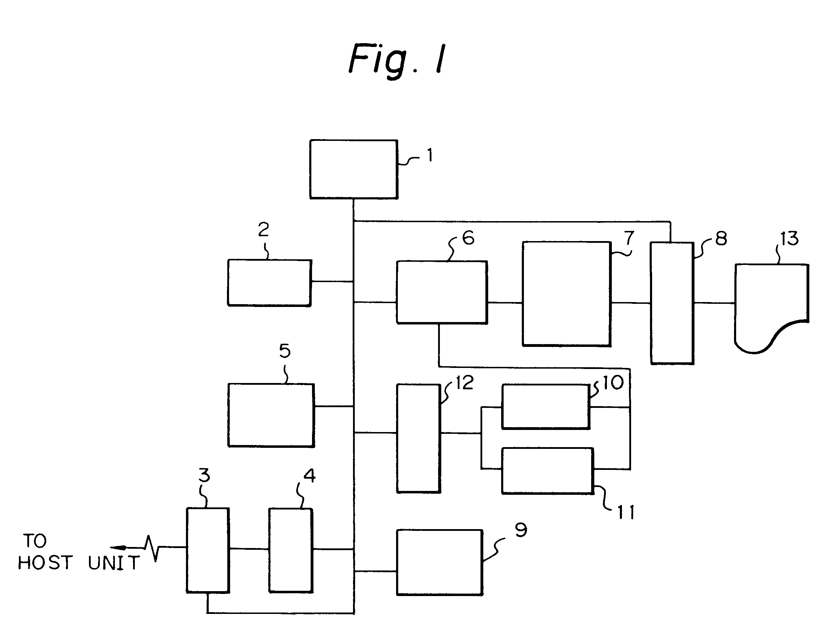

Fig. 1 is a block diagram of a page printer controlled by a conventional printer control system. In Fig. 1, there are shown a microprocessor 1, a program memory 2, an interface 3 which communicates with a host system, not shown, for exchanging data, a receiving buffer 4 for temporarily storing received data including print data, a prebuffer 5 for storing dot image data included in blocks of print data for printing ruled lines and images, a print control unit 6 for editing the received print data in dot image data according to a printing format, a dot image data memory 7 for storing the dot image data edited by the print control unit 6, a printer interface 8 which control operation for reading the dot image data from the dot image memory 7 and transferring the dot image data read from the dot image memory 7, a dot density converting unit 9 for magnifying or reducing a font pattern downloaded from the host system through the interface 3 and the receiving buffer 4, namely, an external font pattern, and a block of dot image data stored in the prebuffer 5 in conformity with the dot density of the page printer, a resident font memory 10 storing font patterns which are used frequently as resident fonts, an external font memory 11 for storing an external font pattern magnified or reduced by the dot density converting unit 9, a font memory control unit 12 for address control to assign the external font pattern magnified or reduced by the dot density converting unit 9 to a specified address and for address control to read a specified font pattern from the resident font memory 10 or the external font memory 11 on the basis of a resident font specifying code or an external font specifying code included in the received print data, and a printing unit 13 for printing characters and ruled lines on a sheet on the basis of the dot image data given thereto from the printer interface 8.

In some cases, a system comprising the components 1 to 13 shown in Fig. 1 is regarded as a page printer, while in other cases, only the printing unit 13 is regarded as a page printer and a system comprising the rest of the components 1 to 12 is regarded as an additional controller. In this case, it is assumed that the resident font pattern is formed of a dot matrix of 32 x 32 and the external font pattern is formed of a dot matrix of 24 x 24.

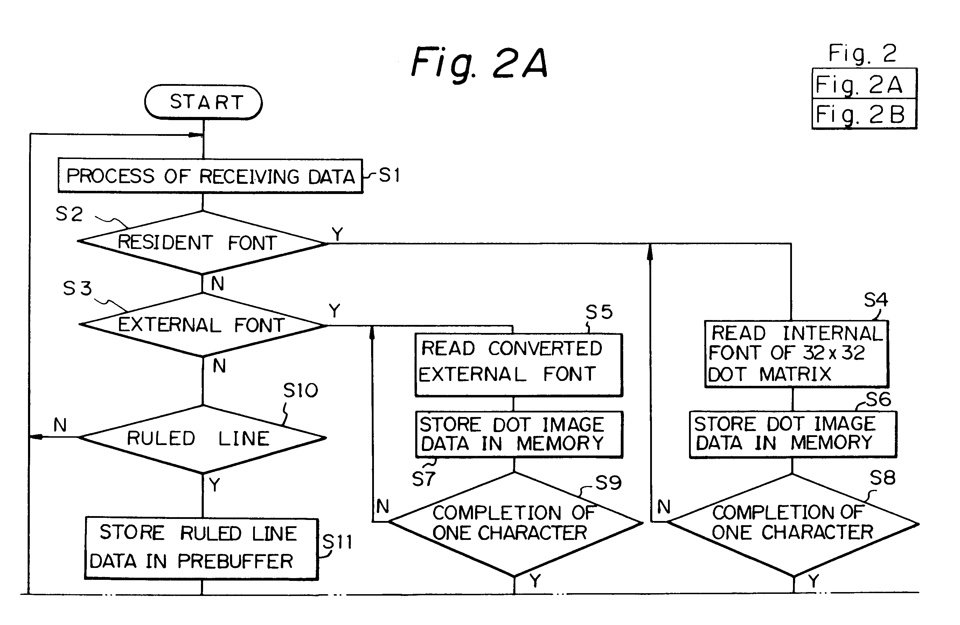

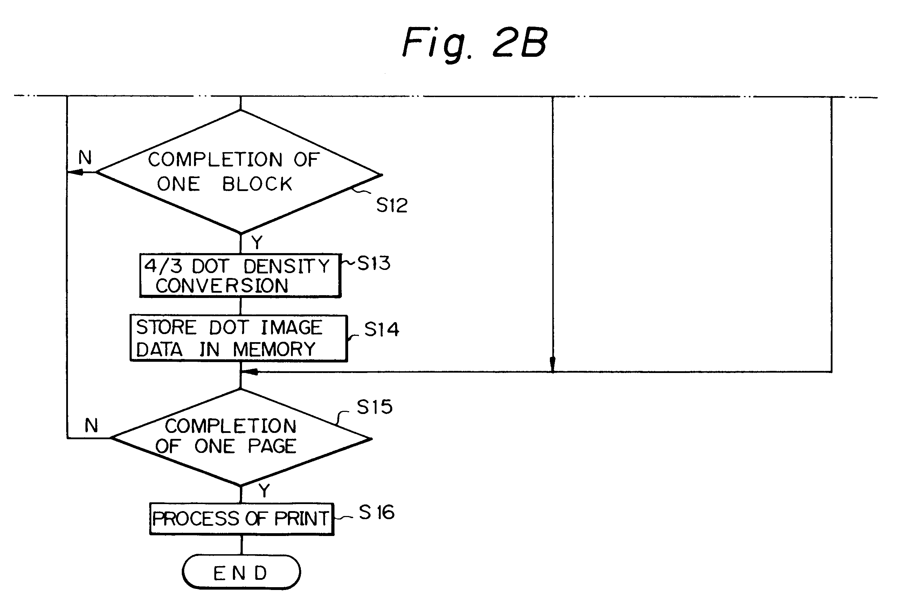

The operation of the page printer shown in Fig. 1 will be described hereinafter with reference to Fig. 2 showing a control program for controlling the page printer. Prior to starting print data reception, the page printer is down-loaded through the interface 3 and the receiving buffer 4 with an external font pattern by the host system, and the external font pattern is stored in the external font memory 11 after being converted into a font patten of a dot matrix of 32 x 32 matching the print dot density of the printing unit 13 by the dot density converting unit 9.

Print data to be printed out by the page printer is transferred from the host system through the interface 3 to the receiving buffer 4 in step s1. Then, the microprocessor 1 executed the following control program.

A query is made in step s2 to see if a font code included in the print data stored in the receiving buffer 4 is a font code specifying the resident font pattern and, when the response in step s2 is negative, a query is made in step s3 to see if the font code is a font code specifying the external font pattern stored in the external font memory 11. The identification of the font code is made with reference to the first byte of a character code of a known binary byte code system.

When the response in step s2 is affirmative, the address of a resident font patterns corresponding to the font code is given to the font memory control unit 12 in step s4. When the response in step s3 is affirmative, the address of the external font pattern corresponding to the font code is given to the font memory control unit 12 in step s5.

At the same time, the microprocessor 1 gives an instruction to the print control unit 6 to edit the font pattern read from the resident font memory 10 or the font pattern read from the external font memory 11 according to codes specifying the character pitch and the line pitch included in the print data. In the case where the character pitch and the line pitch are expressed as numbers of dots, the instruction is expressed as a number of dots according to the print dot density of the printing unit 13.

The print control unit 6 edits the resident font pattern or the external font pattern in dot image data according to the instruction given thereto from the microprocessor 1, and then stores the dot image data in the dot image memory 7 (steps s6, s7, s8 and s9).

A process for printing a ruled line will be described hereinafter.

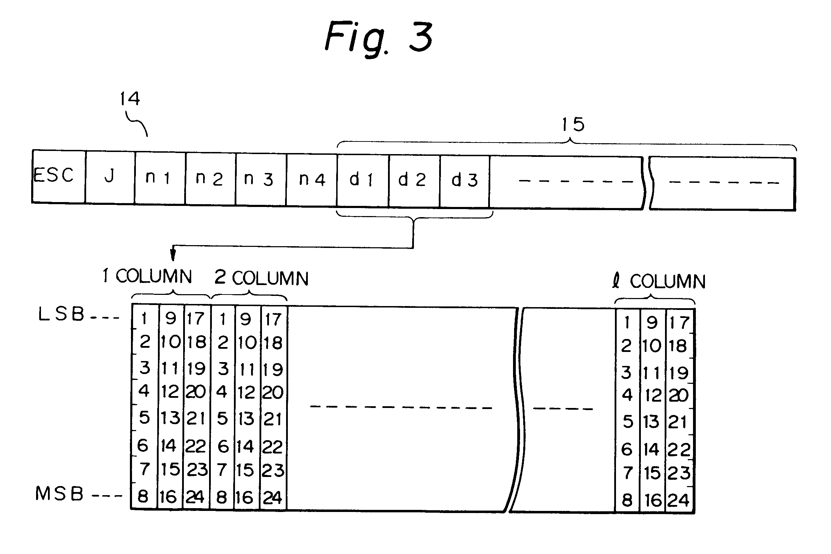

Fig. 3 shows ruled line print data 14 for printing a ruled line. The ruled line print data 14 is data of a printing format for one block matching the dot matrix of 24 x 24. The ruled line print data 14 consists of a code ESC, a code J and data n1, n2, n3, n4, d1, d2, d3, ... which are dot image data of twenty-four bits along the row direction. The data n1, n2, n3 and n4 represent the length (the number of bits) of the ruled line data d1, d2, d3, ... along the row direction. The number of bits along the row direction is an optional value not greater than a value indicating the length of the printing range in the row direction of the recording sheet. The data d1, d2, d3, ... are ruled line data (dot image data) 15 of twenty-four dots in the line direction and dots in the row direction. For example, the data d1, d2 and d3 among the ruled line data 15 indicate the contents of three bytes (twenty-four bits) of the dot image data of the first row.

The ruled line print data 14 for one block is transferred from the host system through the interface 3 to the receiving buffer 4.

When the print data stored in the receiving buffer 4 is the ruled line print data 14 (step s10), the microprocessor 1 stores the ruled line data 15 of twenty-four bits in the line direction and twenty-four bits in the row direction in the prebuffer 5 (step s11). The ruled line data 14 is identified by the codes ESC and J.

When the ruled line data 15 for one block stored in the prebuffer 5, namely, when the response in step s12 is affirmative, the dot density converting unit 9 converts the ruled line data 15 into dot image data matching the print dot density of the printing unit 13 (step s13), and then microprocessor 1 gives and instruction to the print control unit 6 to store the converted dot image data in the dot image memory 7 (step s14).

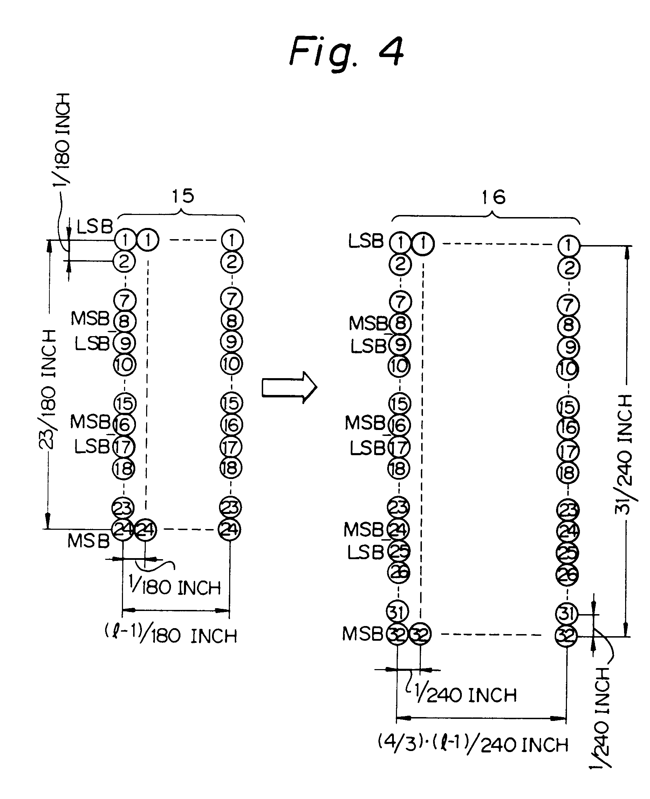

Fig. 4 shows the details of the ruled line data 15 for one block for the serial printer of 24 x 24 dot matrix, and ruled line data 16 for one block for the page printer of 32 x 32 dot matrix produced by converting the ruled line data 15. The dot image data of twenty-four dots of a dot pitch of 1/180 in. in the line direction is converted into the dot image data of thirty-two dots of a dot pitch of 1/240 in. in the line direction, and the dot image data of dots of a dot pitch of 1/180 in. in the new direction is converted into the dot image data of 4/3 dots of a dot pitch of 1/240 in. in the row direction.

Thus, the ruled line data is subjected to dot density conversion in blocks and the converted dot image data is written in the dot image memory 7. This procedure is repeated until all the ruled line data for one page is stored in the dot image memory 7 (step s15). Naturally, the print control unit 6 superposes the previously stored character data and the ruled line data in storing data.

After all the ruled line data for one page has been thus stored, the printer interface 8 reads the dot image data from the dot image memory 7 upon the reception of instruction from the microprocessor 1 and transmits the dot image data to the printing unit 13 to print the dot image data (step s16).

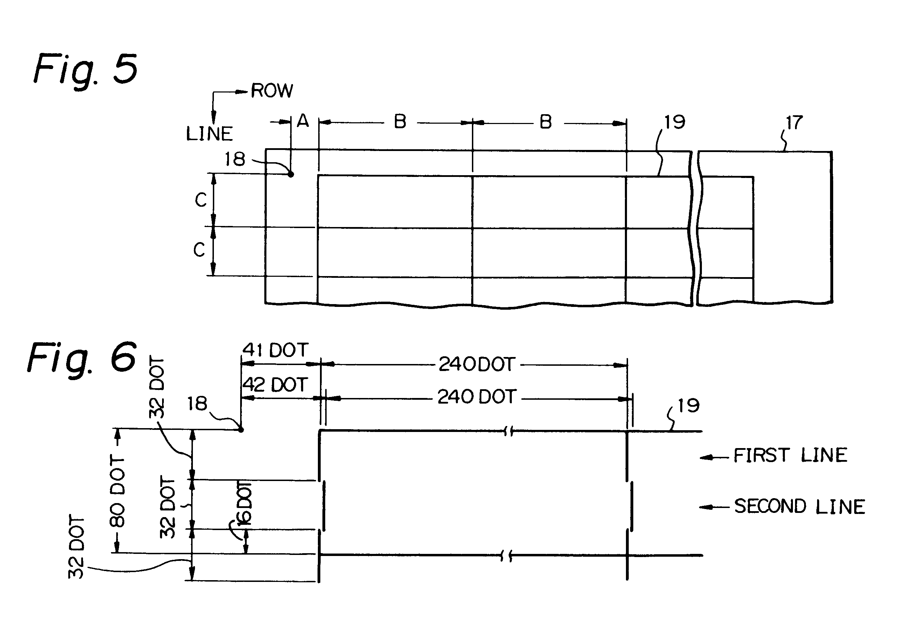

Fig. 5 shows an example of printed ruled lines. In Fig. 5, indicated at 17 is a recording sheet, at 18 is the origin of the recording sheet 17, at 19 are ruled lines, at A is the distance from the origin 18 to the first ruled line in the row direction, at B are intervals between the ruled lines in the direction of row, and at C are intervals between the ruled lines in the line direction.

Suppose that A = 31 dots (31/180 in.), B = 180 dots (180/180 in. = 1 in.) and C = 60 dots (60/180 in. = 1/3 in.) in the ruled line data for the serial printer of 1/180 in. dot pitch transmitted from the host system. Then, the converted ruled line data for the page printer of 1/240 in. dot pitch must be 41 dots (31 x 4/3 = 41.333) in A, 240 dots (180 x 4/3 = 240) in B, and 80 dots (80 x 4/3 = 80) in C.

However, in some cases, the position of the ruled lines with respect to the row direction deviates from the correct position depending on the number of dots in the row direction of the ruled line data included in the ruled line print data for one block, because the conversion ration: (1/180 in.)/(1/240 in.) = 4/3 (1.333 ...) is not an integer.

Suppose that the host system provided ruled line print data for two blocks, for example, ruled line print data for one block including ruled line data of twenty-nine dots in the row direction for the distance A and ruled line print data for another block including ruled line data of two dots in the row direction successive to the twenty-nine dots. The ruled line data of twenty-nine dots in the direction of row is converted into ruled line data of thirty-nine dots (29 x 4/3 - 38.666...) and the ruled line data of two dots in the direction of row is converted into ruled line data of three dots (2 x 4/3 = 2.666...). Thus, ruled line data of thirty-one dots (29 + 2) included in the ruled line print data for the two blocks provided by the host system is converted into ruled line data of forty-two dots in total.

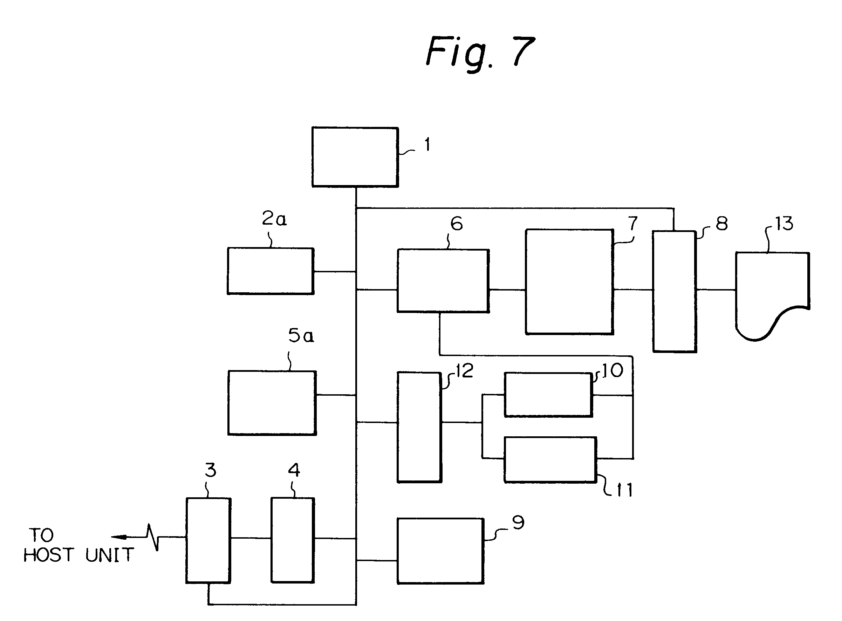

Fig. 6 shows printed ruled lines, in which the ruled line data for the distance A for the first line was given in the ruled line print data for one block, and the ruled line data of the distance A for the second line was given in the ruled line print data for two blocks.

Thus, the conventional printer control system unavoidably causes the printing position of the ruled line to be dislocated from the correct position depending on the number of dots in the row direction of the ruled line data included in the ruled line print data provided by the host system.

It is an object of the present invention to provide a printer control system for controlling a plurality of printers differing from each other in print dot density, capable of converting the print dot density of print data provided by a host system so that the print data provided by the host system can be printed properly in the print dot density of a selected printer among those controlled by the printer control system to secure satisfactory print quality.

It is another object of the present invention to provide a printer control system for controlling a plurality of printers differing from each other in print dot density, capable of controlling the printers so that ruled lines and images (patterns) are printed properly without dislocation.

It is a further object of the present invention to provide a printer control system for controlling a plurality of printers differing from each other in print dot density, capable of providing superposed prints of characters, and ruled lines and images (patterns).

According to a first aspect of the present invention, there is provided a method, as defined with reference to GB-A-2201273, characterised in that for each entire line of printing for a printed page, a group of said blocks, which corresponds to said entire line, is converted from said first to said second dot density collectively in a batch.

According to a second aspect of the present invention, there is provided a printer control system, as defined with reference to GB-A-2201273, characterised in that buffer means has the capacity to store a group of blocks corresponding to one entire line of printing for a printed page and the conversion means acts upon the data for one line of printing, stored in the buffer means, collectively as a batch.

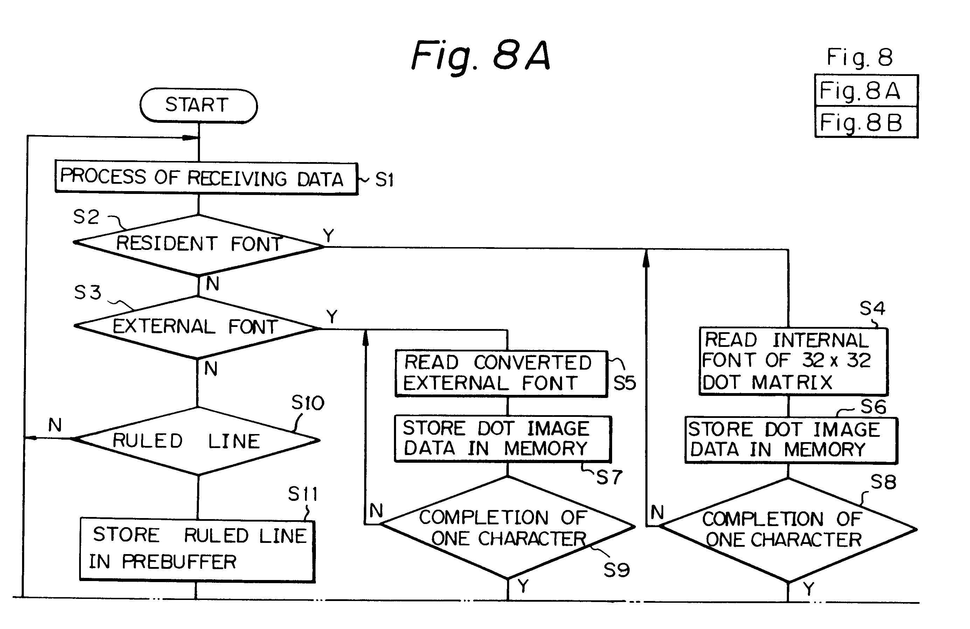

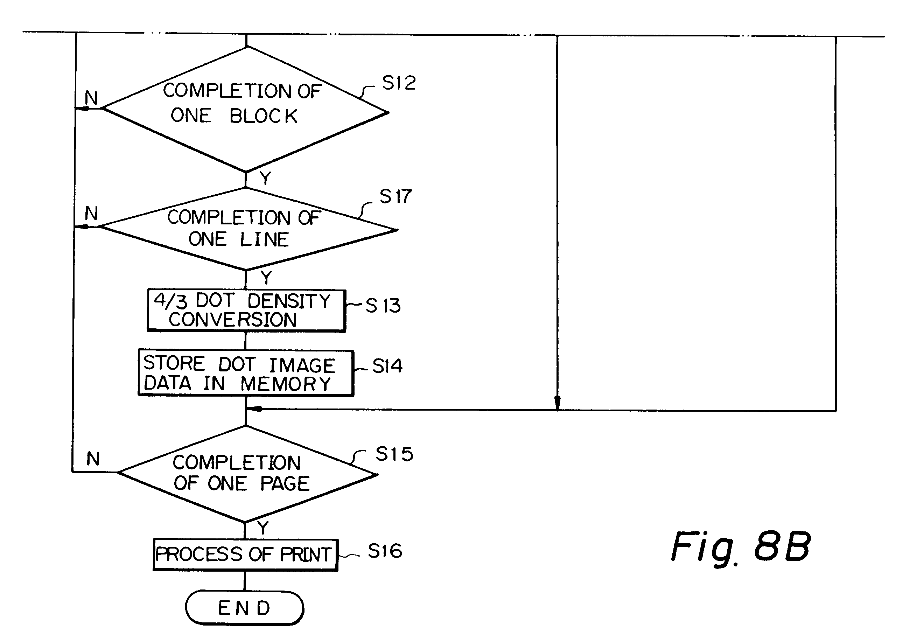

An embodiment of the present invention will now be described, by way of example, with reference to Figures 7 and 8 of the accompanying drawings, in which:
Fig. 1 is a block diagram of a conventional printer control system for controlling a page printer;
Fig. 2 is a flow chart of assistance in explaining a control program to be executed by the conventional printer control system for controlling the page printer of Fig. 1;
Fig. 3 is an illustration of assistance in explaining the constitution of a ruled line print data;
Fig. 4 is an illustration of assistance in explaining a manner of print density conversion for the ruled line data;
Fig. 5 is a diagram showing an example of printed ruled lines;
Fig. 6 is a diagram showing another example of printed ruled lines;
Fig. 7 is a block diagram of a printer control system embodying the present invention, for controlling a page printer; and
Fig. 8 is a flow chart of assistance in explaining a control program to be executed by the printer control system of Fig. 7.

Shown in Fig. 7 are a microprocessor 1, a program memory 2a, an interface 3, a receiving buffer 4, a prebuffer 5a, a print control unit 6, a dot image memory 7, a printer interface 8, a dot density converting unit 9, a resident font memory 10, an external font memory 11, a font memory control unit 12, and a printing unit 13. Actual devices employed as those components are as follows.

Microprocessor 1: 880186 (Intel), Program memory 2a: HN27512 (Hitachi), interface 3: i8051 (Intel), Receiving buffer 4: HM50565 (Hitachi), Prebuffer 5a: HM50464 (Hitachi), Print controller 6: MSM76V007 (OKI), Dot image memory 7: HM514258 (Hitachi), Printer interface 8: MSM79V001 (OKI), Dot density converting unit 9: MSM78H015 (OKI), Resident font memory 10: PD23C4000C (NEC), External font memory 11: HM50464 (Hitachi), Font memory control unit 12: MSM76V001 (OKI).

The prebuffer 5a is the same in function as the prebuffer 5 of the previously described conventional printer control system, except that the prebuffer 5a is capable of storing ruled line data and image data for the entire printing range with respect of the row direction, namely, those for one line, included in print data for printing ruled lines and images given thereto in blocks.

The program memory 2a stores a control program explained in Fig. 8 to be executed by the microprocessor 1 in carrying out printer control operation by the printer control system of the present invention.

Print data, the same as that previously described with reference to the conventional printer control system, is transmitted from a host system to the printer control system, and a dot density converting process for converting the dot density of an external font and a printing process for printing out characters of a resident font and an external font are the same as those (steps s1 through s9) executed by the conventional printer control system, and hence the description thereof will be omitted.

When ruled line print data is stored in the receiving buffer 4 (step s10), the microprocessor 1 stores dot image data for one block of twenty-four bits in the line direction and each number of bits specified by the data n1 to n4 in the direction of row in the prebuffer 5a (steps s11 and s12).

Then, the microprocessor 1 decides whether or not the ruled line data for the entire printing range with respect to the row direction, namely, the ruled line data for one line, has been stored in the prebuffer 5a (step s17). The decision in step s17 is made on the basis of a response to a query to see if a return (line feed) code LF, a V-TAB code indicating a vertical tab (i.e. in the line direction) or the like are included in the print data.

When the decision in step s17 is negative, steps s1 to s3 and steps s10 to s12 are repeated again to store ruled line data included in ruled line print data for the next block, namely, the successive ruled line data, stored in the receiving buffer 4 in the prebuffer 5a.

After the ruled line data for the entire printing range with respect to the row direction has been stored in the prebuffer 5a, the microprocessor 1 controls the dot density converting unit 9 to convert all the ruled line data stored in the prebuffer 5a in batch into dot image data matching the print dot density of the printing unit 13 (step s13), and then controls the print control unit 6 to store the converted dot image data in the dot image memory 7 (step s14).

After the dot density conversion and storage in the dot image memory 7 of the ruled line data for one page have been completed, the microprocessor 1 controls the print interface 8 to transfer the converted dot image data from the dot image memory 7 to the printing unit 13 to print out the converted dot image data.

Although the function of the printer control system has been described as applied to processing ruled line data, the printer control system of the present invention is applicable to processing any kind of data expressed by dot image data including image data representing patterns.

Furthermore, the printer control system has been described as applied to the control of a page printer, the printer control system of the present invention is applicable likewise to any printer which prints in a dot matrix.

As is apparent from the foregoing description, the printer control system of the present invention does not start the print dot density conversion until all the print data for the entire printing range with respect to the row direction are stored in the dot image memory even if ruled line print data including the ruled line data or image print data including the image data for the entire printing range with respect to the row direction is received in a plurality of blocks. Accordingly, the dislocation of the position of dots in the direction of row between printed lines, attributable to the decimal part of the dot density conversion ratio, does not occur, and hence the printer is able to print in a high print quality.

## Claims

1. A method of processing graphics print data wherein blocks of dot data in a format for printing by a printer operative at a first dot density are subjected to a conversion for printing by a printer (13) operative at a second different dot density, **characterised in that** for each entire line of printing for a printed page, a group of said blocks (15), which corresponds to said entire line, is converted from said first to said second dot density collectively in a batch.

2. A method according to claim 1, wherein the batch of data is temporarily stored in a buffer memory (5a) for the batchwise conversion of dot density.

3. A method according to claim 1 or 2, wherein the second dot density is greater than the first dot density.

4. A printer control system comprising buffer means (5a) for storing received blocks of graphics print data in a format for printing by a printer operative at a first dot density, dot density conversion means (9) for converting the graphics print data for printing by a printer operative at a second different dot density and interface means (8) for transferring converted graphics print data to a print unit (13) for printing, **characterised in that** buffer means (5a) has the capacity to store a group of blocks corresponding to one entire line of printing for a printed page and the conversion means (9) acts upon the data for one line of printing, stored in the buffer means (5a), collectively as a batch.

## Patentansprüche

1. Verfahren zum Verarbeiten von Grafikdruckdaten, bei dem Punktdatenblöcke, die sich in einem Format zum Drucken durch einen mit einer ersten Punktdichte arbeitenden Drucker befinden, einer Konvertierung unterzogen werden, um von einem Drucker (13) gedruckt zu werden, der mit einer zweiten, unterschiedlichen Punktdichte arbeitet,
**dadurch gekennzeichnet, daß**
für jede ganze Druckzeile für eine gedruckte Seite eine Gruppe der Blöcke (15), die der ganzen Zeile entspricht, kollektiv als Stapel von der ersten zur zweiten Punktdichte konvertiert wird.

2. Verfahren nach Anspruch 1, bei dem der Datenstapel zur stapelweisen Konvertierung der Punktdichte vorübergehend in einem Pufferspeicher (5a) gespeichert wird.

3. Verfahren nach Anspruch 1 oder 2, bei dem die zweite Punktdichte größer ist als die erste Punktdichte.

4. Drucker-Steuersystem, das folgendes aufweist: eine Puffereinrichtung (5a), um empfangene Grafikdruckdaten-Blöcke, die sich in einem Format zum Drucken durch einen mit einer ersten Punktdichte arbeitenden Drucker befinden, zu speichern, eine Punktdichte-Konvertierungseinrichtung (9), um die Grafikdruckdaten zum Drucken durch einen mit einer zweiten, unterschiedlichen Punktdichte arbeitenden Drucker zu konvertieren, und eine Interface-Einrichtung (8), um konvertierte Grafikdruckdaten zum Drucken an eine Druckeinheit (13) zu übertragen,
**dadurch gekennzeichnet, daß**
die Puffereinrichtung (5a) die Kapazität aufweist, eine Gruppe von Blökken, die einer ganzen Druckzeile für eine gedruckte Seite entsprechen, zu speichern, und daß die Konvertierungseinrichtung (9) auf die in der Puffereinrichtung (5a) kollektiv als Stapel gespeicherten Daten für eine Druckzeile einwirkt.

## Revendications

1. Procédé de traitement de données d'impression graphique dans lequel des blocs de données par points dans un format d'impression par une imprimante opérant à une première densité de points sont soumis à une conversion pour une impression par une imprimante (13) opérant à une seconde densité de points différente, **caractérisé en ce que** pour chaque ligne entière d'impression d'une page imprimée, un groupe desdits blocs (15) qui correspond à ladite ligne entière, est converti de la première dansla seconde densité de points collectivement en une série.

2. Procédé selon la revendication 1, dans lequel la série de données est stockée temporairement dans une mémoire tampon (5a) pour la conversion en séries de densités de points.

3. Procédé selon la revendication 1 ou 2, dans lequel la seconde densité de points est supérieure à la première densité de points.

4. Système de commande d'imprimante comprenant un moyen (5a) formant tampon pour stocker des blocs reçus de données d'impression graphique dans un format d'impression par une imprimante opérant à une première densité de points, un moyen (9) de conversion de densité de points pour convertir les données d'impression graphique pour l'impression par une imprimante opérant à une seconde densité de points différente et des moyens (8) formant interface pour transférer les données d'impression graphique converties, dans une unité d'impression (13) pour l'impression, **caractérisé en ce que** le moyen (5a) formant tampon a la capacité de stocker un groupe de blocs correspondant à une ligne entière d'impression d'une page imprimée et le moyen de conversion (9) agit sur les données pour une ligne d'impression, stockées dans le moyen formant tampon (5a), collectivement comme une série.
